(19) Europäisches Patentamt
European Patent Office
Office européen des brevets

(11) **EP 4 783 662 A1**

(12) **EUROPEAN PATENT APPLICATION**
published in accordance with Art. 153(4) EPC

(43) Date of publication:
**29.07.2026 Bulletin 2026/31**

(21) Application number: 23953222.9

(22) Date of filing: **28.12.2023**

(51) International Patent Classification (IPC):
*H04W 36/00* (2009.01)     *H04W 36/08* (2009.01)
*H04W 52/14* (2009.01)     *H04W 52/32* (2009.01)
*H04L 1/08* (2006.01)

(52) Cooperative Patent Classification (CPC):
**H04L 1/08; H04W 36/00; H04W 36/08;
H04W 52/14; H04W 52/32**

(86) International application number:
**PCT/KR2023/021915**

(87) International publication number:
**WO 2025/063400 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2023   KR 20230125140
24.11.2023   KR 20230165822**

(71) Applicant: **Korea Testing Laboratory (KTL)
Jinju-si, Gyeongsangnam-do 52852 (KR)**

(72) Inventors:
• **PARK, Kwanghyun**
**Hwaseong-si Gyeonggi-do 18283 (KR)**
• **SONG, Hunkun**
**Seoul 08211 (KR)**
• **LEE, Hwiyoung**
**Seoul 08602 (KR)**

(74) Representative: **Fink Numrich
Patentanwälte PartmbB
Paul-Gerhardt-Allee 24
81245 München (DE)**

(54) **METHOD AND APPARATUS FOR PERFORMING HANDOVER PROCEDURE IN WIRELESS COMMUNICATION SYSTEM**

(57)     A method for performing a handover is disclosed. The method for performing a handover, which is performed by a base station, comprises the steps of: receiving a measurement control report from a terminal; determining a handover on the basis of the measurement control report from the terminal; and transmitting a handover request to a target base station, wherein the handover request includes sub-band full duplex (SBFD)-related information of the terminal.

[Fig. 1]

EP 4 783 662 A1

**Description**

**Technical Field**

The present disclosure relates to a handover procedure in a wireless communication system, and more particularly, to a method and apparatus for performing a handover procedure in a wireless communication system that supports sub-band full duplex (SBFD).

The present application was supported by the following national research and development project.

Project Identification No.: 1711134273
Project No.: 2021-0-00749-001
Ministry: Ministry of Science and ICT
Project Management Agency: Institute of Information & Communications Technology Planning & Evaluation (IITP)
Research Project Name: Broadcasting and Communications Industry Technology Development (R&D, informatization)
Research Project Title: Development of platform for 5G+ communication system RF performance verification:

Contribution Ratio: 1/1
Project Implementing Institution: Korea Testing Laboratory
Research Period: April 1, 2021 to December 31, 2023

**Related Art**

A communication system may include a core network, a base station (e.g., macro base station, small base station, relay, etc.), a user equipment (UE), and the like. Communication between a base station and a UE may be performed based on a variety of radio access technology (RAT) (e.g., 4G communication technology, 5G communication technology, wireless broadband (WiBro) technology, wireless local area network (WLAN) technology, wireless personal area network (WPAN) technology, etc.).

Handover is one of the mobility management technologies in a wireless communication system.. Handover is a technology that allows a UE to release connection with an existing source base station and to establish connection with a new target base station when the UE moves from one cell or base station to another cell or base station. Through handover, the UE may receive a stable service in the wireless communication system.

Meanwhile, various radio resource allocation methods are being discussed to increase the efficiency of radio resource operation and to improve the coverage of a base station and a UE in a 5G mobile communication system. Technology for simultaneously transmitting and receiving downlink and uplink in the same time interval in addition to dividing uplink and downlink resources in the time domain using a typical time division duplex (TDD) system is being discussed.

Sub-band full duplex (SBFD) supports simultaneously transmitting and receiving uplink and downlink. According to SBFD, uplink and downlink may be allocated for each sub-band in the frequency domain. SBFD is referred to as cross division duplex (XDD). In XDD, 'X' represents time or frequency. SBFD differs from conventional TDD and frequency division duplex (FDD) in that uplink and downlink are separated using both the time domain and the frequency domain. In an SBFD mode, the frame structure may be significantly more flexible than in conventional TDD and FDD. However, in the SBFD mode, a guard band is insufficient, which causes a signal interference issue.

**Detailed Description**

**Technical Subject**

According to at least one example embodiment, disclosed is a method and apparatus that may perform handover using a sub-band full duplex mode.

**Solution**

According to an aspect, a handover method performed by a base station is disclosed.

The disclosed method may include receiving a measurement control report of a user equipment (UE); determining a handover based on the measurement control report of the UE; and transmitting a handover request to a target base station, and the handover request may include sub-band full duplex (SBFD)-related information of the UE.

The SBFD-related information of the UE may include at least one of whether the UE supports an SBFD mode, SBFD sub-band-related information supported by the UE, uplink transmission power-related information of the UE, information on repetition transmission in the SBFD mode, cross link interference (CLI)-related information, and self-interference (SI)-related information.

The SBFD sub-band-related information supported by the UE may include at least one of information on an SBFD time domain in which an SBFD sub-band is located, the UL sub-band range supported by the UE, the downlink (DL) sub-band range supported by the UE, and an indicator indicating one of a plurality of SBFD sub-band configurations.

The method may further include acquiring the SBFD-related information of the UE from the UE; and providing allocation information of a UL sub-band and an SBFD time domain to the UE. The measurement control report may be received through the UL sub-band in the SBFD time domain.

The method may further include acquiring SBFD-related information of neighboring base stations, and the determining of the handover may determine at least one of the neighboring base stations as a target base station based on the SBFD-related information of the UE and the SBFD-related information of the neighboring base stations.

The SBFD-related information of the neighboring base stations may include at least one of information regarding whether each of the neighboring base stations supports an SBFD mode, SBFD sub-band-related information supported by each of the neighboring base stations, CLI-related information acquired by each of the neighboring base stations, SI-related information acquired by each of the neighboring base stations, UL repetition transmission-related information in the SBFD mode supported (or used) by each of the neighboring base stations, and DL repetition transmission-related information in the SBFD mode supported by each of the neighboring base stations.

The determining of the handover based on the measurement control report of the UE may include determining whether a handover margin is satisfied based on the measurement control report of UE, and when the handover margin is satisfied, determining the handover, and the handover margin may be determined based on whether the base station supports UL repetition transmission in the SBFD mode and whether the target base station supports the UL repetition transmission in the SBFD mode.

When the base station supports the UL repetition transmission in the SBFD mode and the target base station does not support the UL repetition transmission in the SBFD mode, the handover margin may be determined to be greater than a handover margin of a legacy system. The legacy system may be a communication system when the SBFD mode is not introduced, or before the SBFD mode is introduced.

When the base station does not support the UL repetition transmission in the SBFD mode and the target base station supports the UL repetition transmission in the SBFD mode, the handover margin may be determined to be smaller than a handover margin of a legacy system.

The measurement control report may include SBFD-related information of the UE.

The method may further include receiving a handover request acknowledge from the target base station, and the handover request acknowledge may include SBFD-related information of the target base station, and the SBFD-related information of the target base station may include at least one of information regarding whether the target base station supports an SBFD mode, SBFD sub-band-related information supported by the target base station, CLI-related information acquired by the target base station, SI-related information acquired by the target base station, UL repetition transmission-related information in the SBFD mode supported by the target base station, and DL repetition transmission-related information in the SBFD mode supported by the target base station.

The method may include transmitting a message for triggering the handover to the UE, and the message for triggering the handover may include the SBFD-related information of the target base station.

The message for triggering the handover may be an RRCReconfiguration message.

According to another aspect, there is provided a base station including a communication unit; and a processor. The processor may be configured to perform receiving a measurement control report of a user equipment (UE); determining a handover based on the measurement control report of the UE; and transmitting a handover request to a target base station, and the handover request may include sub-band full duplex (SBFD)-related information of the UE.

According to another aspect, a handover method performed by a UE is disclosed.

The disclosed method may include transmitting a measurement control report to a source base station; receiving a message for triggering a handover from the source base station; and performing a random access to a target base station that is identified by the message for triggering the handover, and the message for triggering the handover may include SBFD-related information of the target base station.

The random access to the target base station may be performed through a UL sub-band.

The message for triggering the handover may be an RRCReconfiguration message.

The method may further include providing SBFD-related information of the UE to the source base station; and acquiring allocation information of a UL sub-band and an SBFD time domain from the source base station, and the measurement control report may be transmitted through the UL sub-band in the SBFD time domain.

The performing of the random access to the target base station may include determining PRACH transmission power for the random access to the target base station and performing the random access using the determined PRACH transmission power, and the PRACH transmission power may be determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

When the source base station supports the UL repetition transmission in the SBFD mode and the target base station does not support the UL repetition transmission in the SBFD mode, the PRACH transmission power may be set to be larger than PRACH transmission power in a legacy system.

When the source base station does not support the UL repetition transmission in the SBFD mode and the target base station supports the UL repetition transmission in the SBFD mode, the PRACH transmission power may be set to be smaller than PRACH transmission power in a legacy system.

PUSCH transmission power for the target base station may be determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

When the source base station supports the UL repetition transmission in the SBFD mode and the target base station does not support the UL repetition transmission in the SBFD mode, the PUSCH transmission power may be set to be larger than PUSCH transmission power in a legacy system.

When the source base station does not support the UL repetition transmission in the SBFD mode and the target base station supports the UL repetition transmission in the SBFD mode, the PUSCH transmission power may be set to be smaller than PUSCH transmission power in a legacy system.

PUCCH transmission power for the target base station may be determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

When the source base station supports the UL repetition transmission in the SBFD mode and the target base station does not support the UL repetition transmission in the SBFD mode, the PUCCH transmission power may be set to be larger than PUCCH transmission power in a legacy system.

When the source base station does not support the UL repetition transmission in the SBFD mode and the target base station supports the UL repetition transmission in the SBFD mode, the PUCCH transmission power may be set to be smaller than PUCCH transmission power in a legacy system.

According to another aspect, there is provided a UE including a communication unit; and a processor.

The processor may be configured to perform transmitting a measurement control report to a source base station; receiving a message for triggering a handover from the source base station; and performing a random access to a target base station that is identified by the message for triggering the handover, and the message for triggering the handover may include SBFD-related information of the target base station.

## Effect

According to at least one example embodiment, since sub-band full duplex (SBFD)-related information of a user equipment (UE) is provided to a source base station, an uplink (UL) sub-band of an SBFD mode may be utilized in a handover procedure. According to at least one example embodiment, in a handover procedure, SBFD-related information of a UE may be provided to a target base station, and SBFD-related information of the target base station may be provided to the UE. Accordingly, the UE may transmit signals to the target base station using a UL sub-band in the handover procedure. According to at least one example embodiment, as a UL sub-band is used in a measurement control reporting procedure, a delay time required until handover decision may be shortened. According to at least one example embodiment, since a UL sub-band is used in a process in which a UE performs random access to a target base station, a delay time required to complete radio resource control (RRC) handover may be shortened. According to at least one example embodiment, a UE may perform repetition transmission using a UL sub-band in a handover procedure, thereby increasing accumulated transmission power gain of the UE.

## Brief Description of Drawings

FIG. 1 illustrates a wireless communication system according to an example embodiment.

FIG. 2 is a block diagram illustrating configuration of a communication node that constitutes a communication system.

FIG. 3 illustrates an example of 5G network architecture.

FIG. 4 illustrates a legacy frame structure in a time division duplex (TDD) mode.

FIG. 5 illustrates a frame structure in a sub-band full duplex (SBFD) mode according to an example embodiment.

FIG. 6 is a flowchart illustrating a process in which a source base station acquires SBFD-related information and schedules SBFD resources.

FIG. 7 is a flowchart illustrating a process of performing a handover procedure according to an example embodiment.

FIG. 8 illustrates a case in which a UE transmits a measurement control report using a legacy TDD frame.

FIG. 9 illustrates a case in which a UE transmits a measurement control report using a UL sub-band in an SBFD mode.

FIG. 10 illustrates a case in which a UE performs random access to a target base station using a legacy TDD frame.

FIG. 11 illustrates a case in which a UE performs random access to a target base station using a UL sub-band in an SBFD mode.

FIG. 12 is a flowchart illustrating a process of performing conditional handover (CHO) according to an example embodiment.

FIG. 13 is a graph showing the change in transmission power of a UE 120-1 in a process in which the UE 120-1 performs a handover procedure in a legacy system.

FIG. 14 is a graph showing the change in transmission power in a process in which the UE 120-1 performs a handover procedure from an SBFD base station to a non-SBFD base station.

FIG. 15 is a graph showing the change in transmission power in a process in which the UE 120-1 performs a handover procedure from a non-SBFD base station to an SBFD base station.

## Mode

Various modifications and changes may be made to the present invention and the present invention may include various example embodiments. Specific example embodiments are described in detail with reference to the accompanying drawings. However, it is not to limit the present invention to only the specific example embodiments. Rather, it should be understood to include all of the modifications, equivalents, and substitutions included in the spirit and technical scope of the present invention.

Although the terms "first," "second," etc., may be used herein to describe various components, the components should not be limited by these terms. These terms are only used to distinguish one component from another component. For example, a first component may also be termed a second component and, likewise, a second component may be termed a first component, without departing from the scope of the present invention. As used herein, the term "and/or" includes any and all combinations of one or more of the listed items.

When a component is referred to as being "connected to" or "accessed to" another component, it should be understood that the component may be directly connected to or accessed to the other component, or one or more other intervening components may be present. In contrast, when a component is referred to as being "directly connected to" or "directly accessed to" another component, it should be understood that there is no intervening component.

The terms used herein are used to simply explain specific example embodiments and are not construed to limit the present invention. The singular forms "a," "an," and "the," are intended to include the plural forms as well, unless the context clearly indicates otherwise. It will be further understood that the terms "comprises/comprising (includes/including)," and "has/having" when used in this specification, specify the presence of stated features, integers, steps, operations, components, parts, or combination thereof, but do not preclude the presence or addition of one or more other features, integers, steps, operations, components, parts, or combination thereof.

Unless otherwise defined, all terms including technical and scientific terms used herein have the same meaning as commonly understood by one of ordinary skill in the art to which the present invention pertains. Terms, such as those defined in commonly used dictionaries, should be interpreted as having a meaning that is consistent with their meaning in the context of the relevant art, and should not be interpreted in an idealized or overly formal sense unless expressly so defined herein.

Hereinafter, example embodiments are described in more detail with reference to the accompanying drawings. To facilitate the overall understanding in describing the present invention, like reference numerals are used for like components in the drawings, and redundant description related to the like components is omitted.

Table 1 shows abbreviations used in the present disclosure.

[Table 1]

| Abbreviation | Full name |
| --- | --- |
| 3GPP | 3rd Generation Partnership Project |
| ACK | Acknowledgement |
| AF | Application Function |
| AMF | Access and Mobility Management Function |

(continued)

| Abbreviation | Full name |
| --- | --- |
| AUSF | Authentication Server Function |
| BWP | Bandwidth Part |
| C-RNTI | Cell RNTI |
| CSI | Channel State Information |
| CSI-RS | Channel State Information Reference Signal |
| CLI | Cross link Interference |
| CE | Control Element |
| DCI | Downlink Control Information |
| IE | Information element |
| MAC | Medium Access Control |
| NSSF | Network Slicing Selection Function |
| NEF | Network Exposure Function |
| NRF | NF Repository Function |
| PCF | Policy Control Function |
| PDCCH | Physical Downlink Control Channel |
| PDSCH | Physical Downlink Shared Channel |
| PDU | Protocol Data Unit |
| PRACH | Physical Random Access Channel |
| PT-RS | Phase Tracking Reference Signal |
| PUCCH | Physical Uplink Control Channel |
| PUSCH | Physical Uplink Shared Channel |
| RA | Random Access |
| RACH | Random Access Channel |
| RAN | Radio Access Network |
| RB | Resource Block |
| RRC | Radio Resource Control |
| RSRP | Reference Signal Received Power |
| RSRQ | Reference Signal Received Quality |
| RSSI | Received Signal Strength Indicator |
| SBFD | Sub-Band Full Duplex |
| SI | Self Interference |
| UE | User Equipment |
| DL | Downlink |
| UL | Uplink |
| RAR | Random Access Response |
| RRM | Radio Resource Management |
| RRC | Radio Resource Control |
| QoS | Quality of Service |
| DRB | Data Radio Bearer |

(continued)

| Abbreviation | Full name |
|---|---|
| DAPS | Dual Active Protocol Stack |
| TDD | Time Division Duplexing |
| FDD | Frequency Division Duplexing |

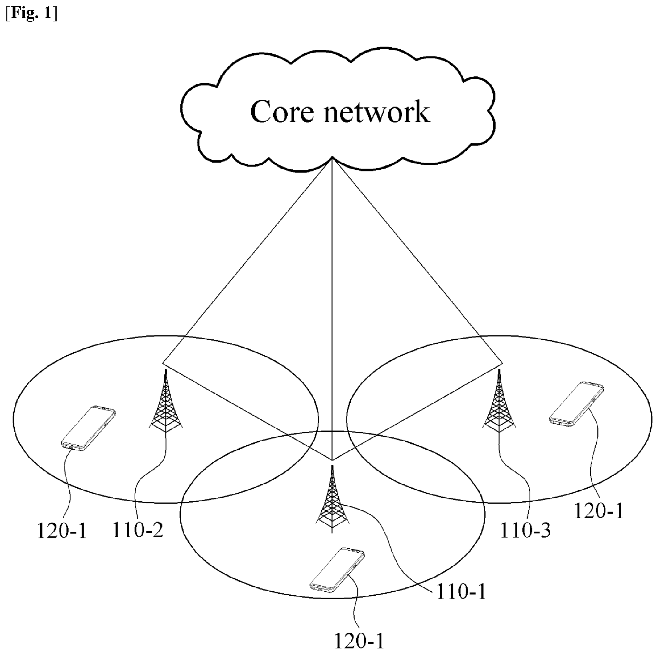

FIG. 1 illustrates a wireless communication system 100 according to an example embodiment.

Referring to FIG. 1, the wireless communication system 100 may include a plurality of communication nodes (110-1, 110-2, 110-3, 120-1, 120-2, 120-3). Here, the communication node refers to a node that may transmit and receive signals in the wireless communication system 100, and each of the plurality of communication nodes (110-1, 110-2, 110-3, 120-1, 120-2, 120-3) may support at least one communication protocol. For example, each of the plurality of communication nodes (110-1, 110-2, 110-3, 120-1, 120-2, 120-3) may support cellular communication (e.g., long term evolution (LTE), LTE-Advanced (LTE-A), 5G NR, 5G-Advanced specified in 3rd generation partnership project (3GPP) standard).

For example, each of the plurality of communication nodes (110-1, 110-2, 110-3, 120-1, 120-2, 120-3) may support a code division multiple access (CDMA)-based communication protocol, a wideband CDMA (WCDMA)-based communication protocol, a time division multiple access (TDMA)-based communication protocol, a frequency division multiple access (FDMA)-based communication protocol, an orthogonal frequency division multiplexing (OFDM)-based communication protocol, an orthogonal frequency division multiple access (OFDMA)-based communication protocol, a single carrier (SC)-FDMA-based communication protocol, a non-orthogonal multiple access (NOMA)-based communication protocol, a space division multiple access (SDMA)-based communication protocol, sub-band full duplex (SBFD), and the like.

The plurality of communication nodes (110-1, 110-2, 110-3, 120-1, 120-2, 120-3) may include the plurality of base stations 110-1, 110-2, and 110-3 and the plurality of UEs 120-1, 120-2, and 120-3. Each of the base stations 110-1, 110-2, and 110-3 may form a cell. The cell may include a small cell, a macro cell, a pico cell, a femto cell, and the like, but example embodiments are not limited thereto. For example, the first UE 120-1 may belong to coverage of the first base station 110-1, the second UE 120-2 may belong to coverage of the second base station 110-2, and the third UE 120-3 may belong to the third base station 110-3. Although

FIG. 1 illustrates a single UE that belongs to coverage of each base station, it is only for convenience description, and a plurality of UEs may belong to the coverage of the base station. Also, if a location of a UE changes in response to movement of the UE, the UE may form radio connection with another base station through handover.

Each of the plurality of base stations 110-1, 110-2, and 110-3 may be referred to as a gNodeB (gNB), a NodeB, an evolved NodeB, a base transceiver station (BTS), a radio base station, a radio transceiver, an access point, an access node, a road side unit (RSU), a radio remote head (RRH), a transmission point (TP), a transmission and reception point (TRP), a relay node, and the like. The plurality of base stations 110-1, 110-2, and 110-3 may form a radio access network (RAN). The radio access network may be connected to a core network.

Each of the plurality of UEs 120-1, 120-2, and 120-3 may be referred to as a terminal, an access terminal, a mobile terminal, a station, a subscriber station, a mobile station, a portable subscriber station, a node, a device, and the like.

Each of the plurality of base stations 110-1, 110-2, and 110-3 may have a different range of supported communication protocols. For example, among the plurality of base stations 110-1, 110-2, and 110-3, some may support an SBFD mode, and the remaining may not support the SBFD mode. Similarly, each of the UEs 120-1, 120-2, and 120-3 may have different range of supported communication protocols. For example, among the plurality of UEs 120-1, 120-2, and 120-3, some may support the SBFD mode, and the remaining may not support the SBFD mode.

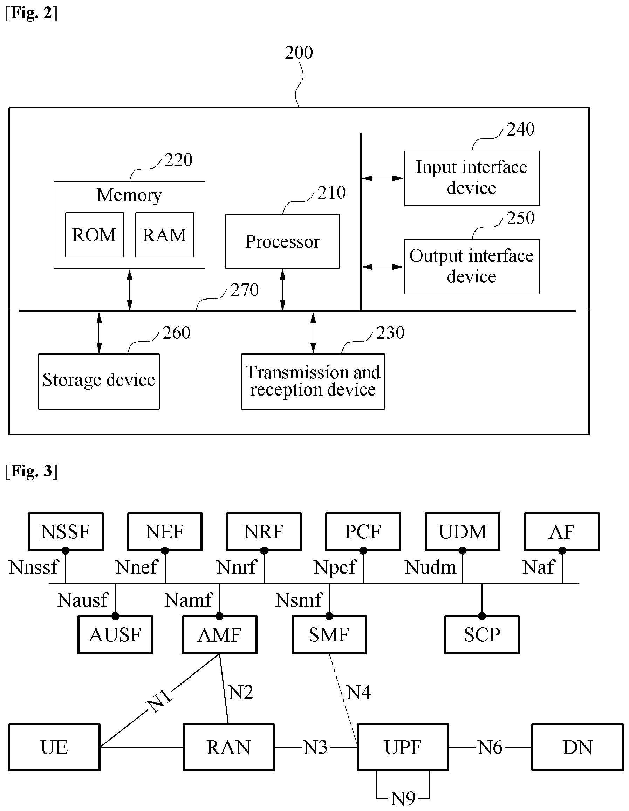

FIG. 2 is a block diagram illustrating the configuration of a communication node 200 that constitutes a communication system. At least some of the communication nodes (110-1, 110-2, 110-3, 120-1, 120-2, 120-3) shown in FIG. 1 may correspond to the communication node 200 of FIG. 2.

Referring to FIG. 2, the communication node 200 may include at least one processor 210, a memory 220, and a transmission and reception device 230 that performs communication through connection to a network. Also, the communication node 200 may further include an input interface device 240, an output interface device 250, and a storage device 260. Each of the components included in the communication node 200 may be connected by way of a bus 270, and may perform mutual communication.

The processor 210 may execute a program command stored in at least one of the memory 220 and the storage device 260. The processor 210 may represent a central processing unit (CPU), a graphics processing unit (GPU), or a dedicated processor of performing methods according to example embodiments. Each of the memory 220 and the storage device 260 may be configured as at least one of a volatile storage medium and a nonvolatile storage medium. For example, the memory 220 may be configured as at least one of a read only memory (ROM) and a random access memory (RAM).

FIG. 3 illustrates an example of 5G network architecture.

Referring to FIG. 3, the 5G network architecture may include an NSSF that provides a network slicing control solution, an NEF that provides a network function opening solution, an NRF that provides an NF interaction control function within a 5G network, a PCF that provides a data packet flow strategy control solution, a UDM that provides a user information and strategy management solution, an AMF that provides a network access and mobility management solution, an SMF that provides a session management solution between a UE and a network, a UPF that provides a user packet routing and UE connectivity providing solution between base stations, a radio access network (RAN), and a UE.

N1 reference point is defined to transmit signaling between the UE and the AMF, a reference point for connecting the access node of the RAN and the AMF is defined as N2, and a reference point for connecting the access node of the RAN and the UPF is defined as N3.

Hereinafter, for convenience of description, the first base station 110-1 shown in FIG. 1 is referred to as a source base station, and the first UE 120-1 is referred to as a UE.

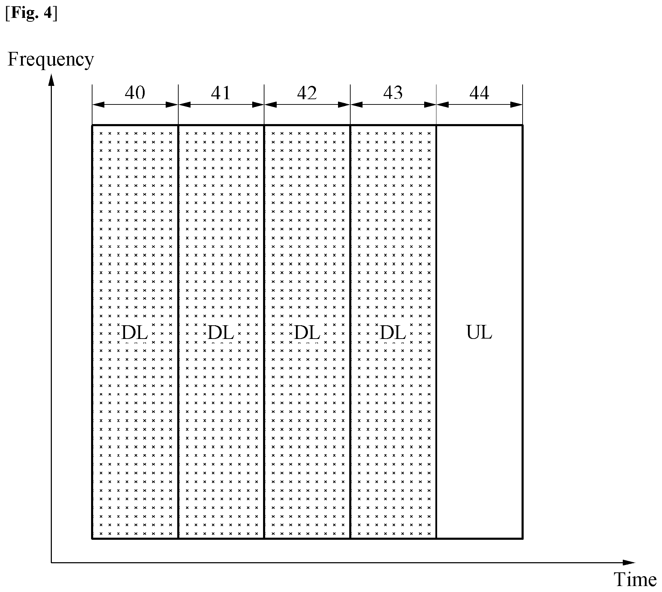

FIG. 4 illustrates a legacy frame structure in a TDD mode.

Referring to FIG. 4, in the time domain, a time interval 40 may be defined. The time interval may also be referred to as a time unit. The time interval 40 may correspond to one of a slot, a symbol, and a subframe. As another example, the time interval 40 may be defined to include a plurality of slots. As another example, the time interval 40 may be defined to include a plurality of symbols. As another example, the time interval 40 may be defined to include a plurality of subframes.

In the TDD mode, downlink resources may be allocated in first to fourth time intervals 40, 41, 42, and 43. Downlink signals may be transmitted in the first to fourth time intervals 40, 41, 42, and 43. Uplink resources may be allocated in a fifth time interval 44. In the fifth time interval 44, uplink signals may be transmitted. According to the legacy frame structure shown in FIG. 4, even when an uplink signal needs to be transmitted between the first to fourth time intervals 40, 41, 42, and 43, the UE 120-1 may wait until the fifth time interval 44 to which uplink resources are allocated arrives, and then may transmit the uplink signal. Therefore, latency may occur until the UE 200-1 transmits the uplink signal.

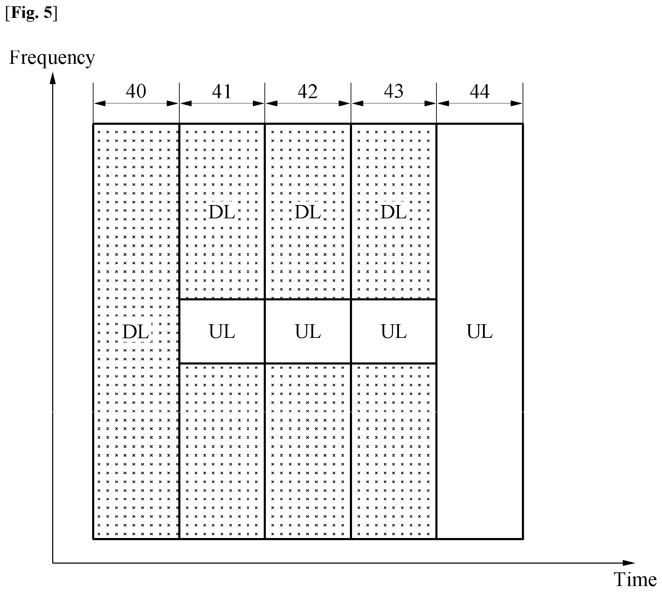

FIG. 5 illustrates the frame structure in an SBFD mode according to an example embodiment.

Referring to FIG. 5, in the SBFD mode, uplink resources and downlink resources may be simultaneously allocated in the first to fourth time intervals 40, 41, 42, and 43. In the first to fourth time intervals 40, 41, 42, and 43, UL sub-bands for uplink transmission and DL sub-bands for downlink transmission may be simultaneously allocated. A time interval in which the UL sub-bands and the DL sub-bands are simultaneously allocated and sub-band full duplex communication is possible may be referred to as an SBFD time domain.

Although not illustrated in FIG. 5, there may be a time domain in which downlink is allocated before the first to fourth time intervals 40, 41, 42, and 43 corresponding to the SBFD time domain. Through downlink allocated before the SBFD time domain, the base station may transmit scheduling information on the SBFD sub-band and the SBFD time domain to the UE.

In FIG. 5, the first to fourth time intervals 40, 41, 42, and 43 may correspond to the SBFD time domain. The SBFD time domain may be defined to include at least one slot. As another example, the SBFD time domain may be defined to include at least one symbol. As another example, the SBFD time domain may be defined to include at least one subframe.

Each of the UL sub-band and the DL sub-band may include at least one RB. For example, each of the UL sub-band and the DL sub-band may include RBs that are consecutively arranged. As another example, each of the UL sub-band and the DL sub-band may include RBs that are inconsecutively arranged in at least a portion.

Each of the UL sub-band and the DL sub-band may include at least one BWP. For example, each of the UL sub-band and the DL sub-band may include at least one legacy BWP. As another example, each of the UL sub-band and the DL sub-band may include at least one BWP that is separately defined to support SBFD.

As described above, the SBFD sub-band may be configured within a carrier of a TDD mode for SBFD mode operation. The SBFD sub-band may include the UL sub-band and the DL sub-band. FIG. 5 illustrates a case in which the UL sub-band is located in an intermediate portion of the carrier as an example. However, the example embodiment is not limited thereto. For example, the UL sub-band may be located at the edge of the carrier. As another example, the UL sub-band may be located at another location other than the exact center of the carrier.

Also, a guard period may be arranged between the SBFD time domain and a non-SBFD time domain to which SBFD is not applied. Each of the SBFD time domain and the non-SBFD time domain may include at least one symbol.

Time and frequency locations of the SBFD sub-band may be semi-statically configured and indicated. As another example, time and frequency locations of the SBFD sub-band may be dynamically configured and indicated.

In the SBFD mode, uplink resources and downlink resources may be flexibly distributed, thereby improving the usage efficiency of radio resources. Also, due to a reduction in an amount of time used for the UE 120-1 to wait for uplink signal transmission and to wait for downlink signal reception, latency may be reduced. Also, in the SBFD mode, the UE 120 may repeatedly transmit UL signals and repeatedly receive DL signals in the plurality of time intervals 40, 41, 42, and 43, so the transmission gain of UL signals and DL signals may be increased, and the coverage of the source base station 110-1 and the UE 120-1 may be expanded.

However, in the SBFD mode, the guard band with a sufficient size may not be prepared between the UL sub-band and the DL sub-band. Therefore, in the SBFD mode, a problem by CLI or SI is highly likely to occur.

The following example embodiment describes a method of utilizing the SBFD mode in the handover procedure of the UE 120-1.

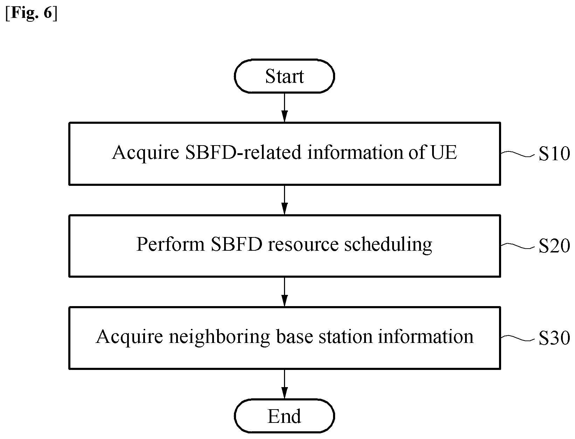

FIG. 6 is a flowchart illustrating a process in which the source base station 110-1 acquires SBFD-related information and schedules SBFD resources.

Referring to FIG. 6, in operation S10, the source base station 110-1 may acquire SBFD-related information of the UE 120-1 from the UE 120-1. The SBFD-related information of the UE 120-1 may include at least one of whether the UE 120-1 supports an SBFD mode, SBFD sub-band-related information supported (or used) by the UE 120-1, uplink transmission power-related information of the UE 120-1, information on repetition transmission in the SBFD mode, CLI-related information, and SI-related information.

The SBFD sub-band-related information may include information on the SBFD time domain in which the SBFD sub-band is located. The SBFD sub-band-related information of the UE 120-1 may include the UL sub-band range supported (or used) by the UE, and the DL sub-band range supported (or used) by the UE. The UL sub-band range supported (or used) by the UE may include a starting point of the UL sub-band. The UL sub-band range may include the number of RBs included in the UL sub-band or BWP information included in the UL sub-band. The range of the DL sub-band supported (or used) by the UE may include a starting point of the DL sub-band. The DL sub-band range may include the number of RBs included in the DL sub-band or BWP information included in the DL sub-band. The SBFD sub-band-related information may include an indicator or an index indicating one of the configurations for the predefined SBFD sub-band. For example, the UE 120-1 may support one of a plurality of SBFD sub-band configurations included in an SBFD sub-band configuration set. The SBFD sub-band-related information may include an indicator or an index indicating one of the plurality of SBFD sub-band configurations.

In the SBFD mode, information on the repetition transmission may include at least one of whether UL repetition transmission is performed in the SBFD mode, the UL repetition transmission count, whether DL repetition transmission is performed, and the DL repetition transmission count.

At least a portion of the SBFD-related information of the UE 120-1 may not be transmitted in operation S10, and may be transmitted to the source base station 110-1 through a measurement control report of a handover procedure.

The source base station 110-1 may acquire SBFD-related information of the UE 120-1 based on UE capability information received from the UE 120-1. The source base station 110-1 may transmit a UE capability enquiry message to the UE 120-1, and may receive a UE capability information message from the UE 120-1. The UE capability information may include an information element (IE) for the SBFD-related information of the UE 120-1. As another example, the source base station 110-1 may acquire the SBFD-related information by receiving separate signaling for transmitting the SBFD-related information from the UE 120-1. As another example, the source base station 110-1 may receive from the AMF with an IE that includes the SBFD-related information of the UE 120-1 or UE capability information that includes the SBFD-related information of the UE 120-1.

In operation S20, the source base station 110-1 may schedule SBFD resources. The source base station 110-1 may schedule SBFD resources based on the SBFD-related information of the UE 120-1. If the source base station 110-1 does not support the SBFD mode, the source base station 110-1 may not separately allocate SBFD resources. Also, when the UE 120-1 does not support the SBFD mode, the source base station 110-1 may not allocate the UL sub-band of the SBFD mode to the UE 120-1.

The source base station 110-1 may transmit scheduling information of SBFD resources to the UE 120-1. The scheduling information of SBFD resources may be broadcasted through a system information block. As another example, the scheduling information of SBFD resources may be provided to the UE 120-1 through at least one of RRC signaling, upper layer signaling, a MAC CE, and DCI.

For example, the source base station 110-1 may transmit information on the SBFD time domain to the UE 120-1 using a slot format. In this case, a new slot including the UL sub-band and the DL sub-band of SBFD in addition to a downlink slot (D), an uplink slot (U), and a flexible slot (F) of a legacy NR may be provided. The source base station 110-1 may provide information on a slot format to the UE 120-1 to activate the UL sub-band and the DL sub-band using at least one of a tdd-UL-DL-ConfigurationCommon IE, a tdd-UL-DL-ConfigurationDedicated IE, and DCI. However, the example embodiment is not limited thereto. The source base station 110-1 may perform signaling by configuring a separate IE that indicates the SBFD time domain. The IE that indicates the SBFD time domain may include information on the number of slots in the SBFD time domain and a slot starting point. As another example, the IE that indicates the SBFD time domain may include information on the number of symbols in the SBFD time domain and a symbol starting point. As another example, the IE that indicates the SBFD time domain may include information on the number of subframes in the SBFD time domain and a subframe starting point.

The source base station 110-1 may provide information on the UL sub-band and/or the DL sub-band in the SBFD time domain to the UE 120-1. For example, the source base station 110-1 may provide information on the starting point of the UL sub-band and/or DL sub-band and the number of consecutive RBs included in the UL sub-band and/or DL sub-band to the UE 120-1. As another example, information on the UL sub-band and/or DL sub-band may include BWP information included in the UL sub-band and/or DL sub-band and BWP information set to define the UL sub-band and/or DL sub-band.

In operation S30, the source base station 110-1 may acquire SBFD-related information of the neighboring base stations 110-2 and 110-3. The source base station 110-1 may acquire the SBFD-related information of the neighboring base stations 110-2 and 110-3 from the neighboring base stations 110-2 and 110-3 using an Xn interface. Also, the source base station 110-1 may provide its own SBFD-related information to the neighboring base stations 110-2 and 110-3 through the Xn interface. As another example, the source base station 110-1 may acquire the SBFD-related information of the neighboring base stations 110-2 and 110-3 from the AMF through an N2 interface. Also, the SBFD-related information of the source base station 110-1 may be provided to the neighboring base stations 110-2 and 110-3 by way of the AMF.

The source base station 110-1 may acquire SBFD-related information of the neighboring base stations 110-2 and 110-3 or the target base station as a portion of measurement configuration.

The SBFD-related information of the source base station 110-1 may include at least one of information regarding whether the source base station 110-1 supports the SBFD mode, SBFD sub-band-related information supported (or used) by the source base station 110-1, CLI-related information acquired by the source base station 110-1 from the UE 120-1, SI-related information acquired by the source base station 110-1 from the UE 120-1, UL repetition transmission-related information in the SBFD mode supported by the source base station 110-1, and DL repetition transmission-related information in the SBFD mode supported by the source base station 110-1.

The SBFD sub-band-related information may include information on the SBFD time domain in which the SBFD sub-band is located. The SBFD sub-band-related information of the source base station 110-1 may include the UL sub-band range supported (or used) by the source base station 110-1, and the DL sub-band range supported (or used) by the source base station 110-1.

The SBFD sub-band-related information may include an indicator or an index indicating any one of the plurality of SBFD sub-band configurations.

The SBFD-related information of the neighboring base stations 110-2 and 110-3 may include at least one of information regarding whether each of the neighboring base stations 110-2 and 110-3 supports the SBFD mode, SBFD sub-band-related information supported (or used) by each of the neighboring base stations 110-2 and 110-3, CLI-related information acquired by each of the neighboring base stations 110-2 and 110-3, SI-related information acquired by each of the neighboring base stations 110-2 and 110-3, UL repetition transmission-related information in the SBFD mode supported (or used) by each of the neighboring base stations 110-2 and 110-3, and DL repetition transmission-related information in the SBFD mode supported by each of the neighboring base stations 110-2 and 110-3.

The SBFD sub-band-related information may include information on the SBFD time domain in which the SBFD sub-band is located. The SBFD sub-band-related information of each of the neighboring base stations 110-2 and 110-3 may include the UL sub-band range supported (or used) by each of the neighboring base stations 110-2 and 110-3 and the DL sub-band range supported (or used) by each of the neighboring base stations 110-2 and 110-3.

The SBFD sub-band-related information may include an indicator or an index indicating one of configurations for the predetermined SBFD sub-band.

The source base station 110-1 may utilize the SBFD-related information of the UE 120-1 acquired in operation S10 and the SBFD-related information of the neighboring base stations 110-2 and 110-3 acquired in operation S30 to prepare or proceed with the handover procedure.

The source base station 110-1 may determine at least one target base station based on at least one of its own traffic load, time and/or frequency resource status, the measurement control report of the UE 120-1, the SBFD-related information of the UE 120-1, the SBFD-related information of the neighboring base stations 110-2 and 110-3, and the traffic load of the neighboring base stations 110-2 and 110-3.

For example, when the UE 120-1 does not support the SBFD mode, the source base station 110-1 may determine the target base station in a similar manner to the conventional manner, without considering the SBFD mode. When the UE 120-1 supports the SBFD mode, the source base station 110-1 may determine whether to utilize the SBFD mode in the handover procedure based on the SBFD-related information of the neighboring base stations 110-2 and 110-3 and the SBFD-related information of the UE 120-1.

The UE 120-1 may utilize the UL sub-band of the SBFD mode when transmitting the measurement control report in the handover procedure. As another example, the UE 120-1 may utilize the UL sub-band of the SBFD mode when transmitting and receiving signals to and from the target base station in the handover procedure. To this end, the source base station 110-1 may determine a base station capable of supporting the SBFD mode to the UE 120-2 among the neighboring base stations 110-2 and 110-3 as the target base station, such that the UE 120-1 may transmit and receive signals to and from the target base station using the UL sub-band of the SBFD mode.

The source base station 110-1 may determine the target base station in consideration of UL sub-band information in which the UE 120-1 may support the SBFD mode, and UL sub-band information in which the neighboring base stations 110-2 and 110-3 may support the SBFD mode. The source base station 110-1 may determine, as the target base station, a base station that may allocate a UL sub-band available by the UE 120-1 among the neighboring base stations 110-2 and 110-3.

The source base station 110-1 may determine the target base station based on at least one of CLI measurement information of the UE 120-1, SI measurement information of the UE 120-1, channel measurement information of the UE 120-1 for the source base station 110-1, channel measurement information of the UE 120-1 for the neighboring base stations 110-2 and 110-3, and the traffic load of the neighboring base stations 110-2 and 110-3.

As another example, the target base station may be determined by the AMF, and the source base station 110-1 may acquire information on the target base station from the AMF. The AMF may determine the target base station based on the SBFD-related information of the UE 120-1 and the SBFD-related information of the neighboring base stations 110-2 and 110-3.

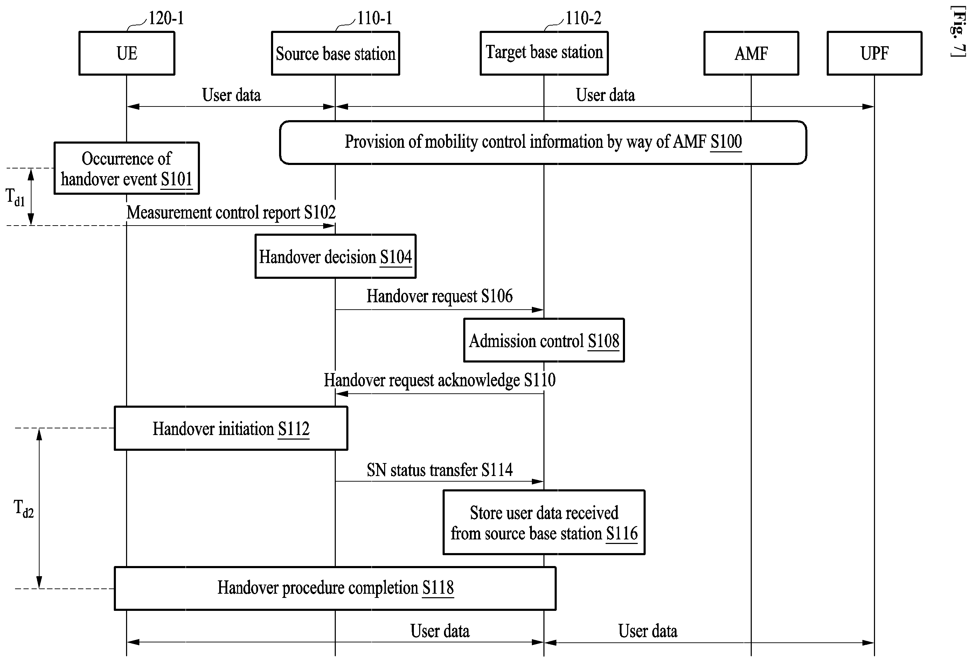

FIG. 7 is a flowchart illustrating a process of performing a handover procedure according to an example embodiment.

Before initiating the handover procedure of FIG. 7, the source base station 110-1 may acquire SBFD-related information of the UE 120-1 and SBFD-related information of the target base station 110-2 in advance by performing operations S10 and S30 of FIG. 6. However, the example embodiment is not limited thereto. As another example, in operation S100 of FIG. 7, the source base station 110-1 may acquire the SBFD-related information of the target base station 110-2 from the AMF.

Referring to FIG. 7, in operation S100, mobility control information by the AMF may be provided to the base stations 110-1 and 110-2. The source base station 110-1 may acquire at least a portion of the SBFD-related information of the target base station 110-2 in advance through an Xn interface. For example, the source base station 110-1 may acquire information regarding whether the target base station 110-2 supports the SBFD in advance through the Xn interface. As another example, the source base station 110-1 may acquire at least a portion of the SBFD-related information of the target base station 110-2 from the AMF.

In operation S101, a handover event may occur. The handover event may be triggered due to movement of the UE 120-1.

In operation S102, the UE 120-1 may transmit a measurement control report to the source base station 110-1. When the UE 120-1 supports the SBFD mode, the source base station 110-1 may allocate SBFD resources to the UE 120-1 in operation S20 of FIG. 6. The UE 120-1 may transmit the measurement control report to the source base station 110-1 using the SBFD resources. Here, although the UE 120-1 supports the SBFD mode, if CLI and/or SI are severe, the UE 120-1 may be restricted from using the UL sub-band in the SBFD mode.

When the UE 120-1 performs measurement reporting using the UL sub-band in the SBFD mode, a delay time ($T_{d1}$) shown in FIG. 7 may be reduced. For example, when the UE 120-1 uses a legacy TDD frame, the delay time ($T_{d1}$) from occurrence of the handover event to transmission of the measurement control report may increase since the UE 120-1 is allocated UL resources less frequently. In contrast, when the UE 120-1 uses the UL sub-band using the SBFD mode, the probability that the delay time ($T_{d1}$) decreases may relatively increase since UL resources are allocated more frequently.

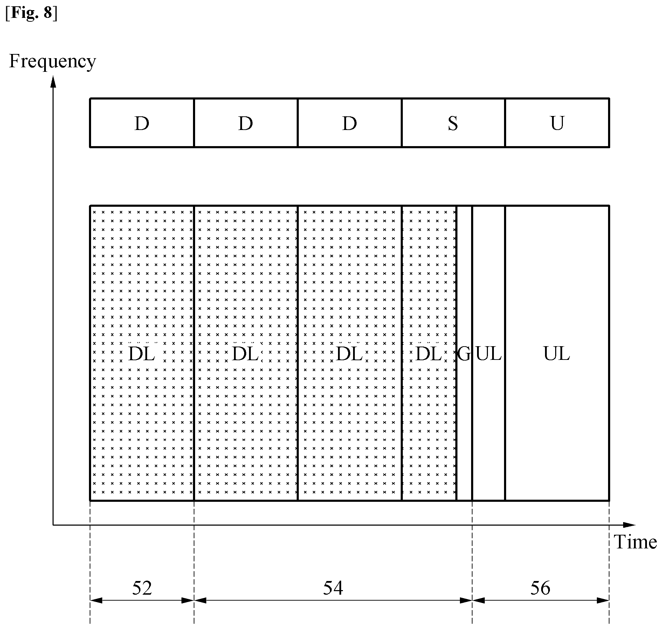

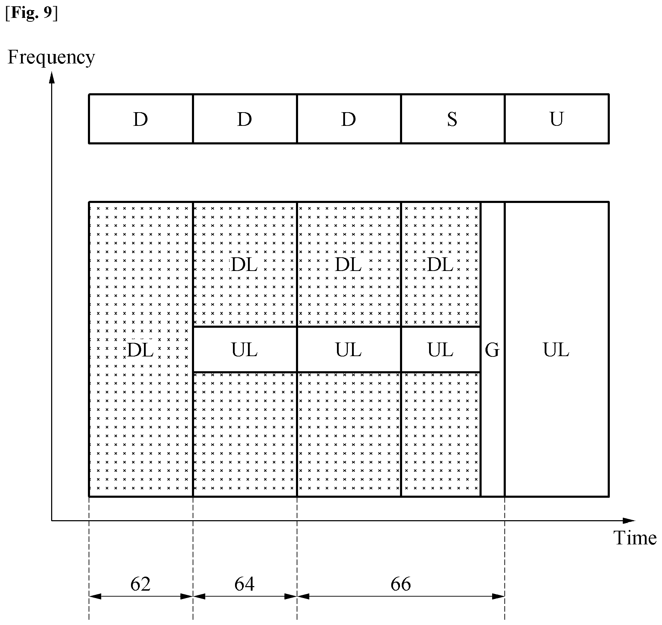

FIG. 8 illustrates a case in which the UE 120-1 transmits a measurement control report using a legacy TDD frame. FIG. 9 illustrates a case in which the UE 120-1 transmits a measurement control report using a UL sub-band in an SBFD mode.

Hereinafter, in FIGS. 8 to 11, "D" represents a DL slot, "U" represents a UL slot, and "S" represents a special slot.

Referring to FIG. 8, a situation in which the UE 120-1 receives a reference signal in a time interval 52 to which first downlink resources are allocated may be assumed. Also, it may be assumed that the UE 120-1 determines that the handover event has occurred in the first time interval 52. The reference signal may include a CSI-RS, a PT-RS, and the like. The UE 120-1 may transmit the measurement control report based on the measurement result of the reference signal. The UE 120-1 may wait without performing the measurement control report since UL resources are not allocated in a second time interval 54. The UE 120-1 may transmit the measurement control report after a starting point of a third time interval 56 to which uplink resources are allocated. Therefore, the UE 120-1 may wait without performing the measurement control report during at least a time interval greater than or equal to the second time interval 54. Therefore, the measurement control report may be delayed. Therefore, latency may occur until the source base station 110-1 determines a handover. When the UE 120-1 quickly moves or when the channel environment of the UE 120-1 quickly changes, a radio communication service may not be smoothly performed due to the latency in the handover procedure.

Referring to FIG. 9, a situation in which the UE 120-1 receives a reference signal using a DL sub-band in a first time interval 62 may be assumed. Also, it may be assumed that the UE 120-1 determines that the handover event has occurred in the first time interval 62. The UE 120-1 may transmit a measurement control report using a UL sub-band in the second time interval 64. Of course, the UE 120-1 may perform the measurement control report using the UL sub-band in a third time interval 66. Referring to FIG. 9, compared to the case of FIG. 8, UL resource allocation required for the UE 120-1 to perform the measurement control report is flexibly and quickly performed, so latency occurring in the handover process may be reduced.

Referring again to FIG. 7, the measurement control report of operation S102 may include the SBFD-related information of the UE 120-1. The SBFD-related information of the UE 120-1 included in the measurement control report may further include at least one of whether the UE 120-1 supports the SBFD mode, the maximum number of UL sub-bands supported by the UE 120-1, the UL sub-band supported range by the UE 120-1, uplink transmission power-related information of the UE 120-1, CLI-related information, and SI-related information.

In operation S104, the source base station 110-1 may determine the handover based on the measurement control report of the UE 120-1. The source base station 110-1 may determine the handover based on at least one of the downlink channel measurement result of the UE 120-1, the uplink channel measurement result based on an SRS transmitted from the UE, the SBFD-related information of the UE 120-1, the SBFD-related information of the neighboring base stations 110-2 and 110-3, the traffic load of the source base station 110-1, and the traffic load of the neighboring base stations 110-2 and 110-3.

For example, when the source base station 110-1 supports the repetition transmission in the SBFD mode and the target base station 110-2 does not support the repetition transmission in the SBFD mode, the source base station 110-1 may correct a handover margin in consideration of the gain difference in the repetition transmission. Whether a candidate base station that may become the target base station supports SBFD mode repetition transmission may be determined based on the SBFD-related information of the neighboring base stations 110-2 and 110-3.

For example, the source base station 110-1 may correct the handover margin as shown in Equation 1.

[Equation 1]

$$\text{HO margin(SBFD)} = \text{HO margin(Legacy)} + 10\log(\text{SBFD Repetition\_Source})$$

In Equation 1, HO margin(Legacy) represents the handover margin when the difference in the repetition transmission between the source base station 110-1 and the target base station 110-2 is not considered. HO margin(SBFD) represents the handover margin when the difference in the repetition transmission between the source base station 110-1 and the target base station 110-2 is considered. 10log(SBFD Repetition_Source) represents a handover margin correction value that considers the repetition transmission of the source base station 110-1 in the SBFD mode.

When the source base station 110-1 supports the repetition transmission in the SBFD mode and the target base station 110-2 does not support the repetition transmission in the SBFD mode, the source base station 110-1 may set the handover margin to be higher than before. This ensures the quality of service although the UE 120-1 is connected to the target base station 110-2 that does not support SBFD.

As another example, when the source base station 110-1 does not support the repetition transmission in the SBFD mode and the target base station 110-2 supports the repetition transmission in the SBFD mode, the source base station 110-1 may correct the handover margin in consideration of the gain difference in repetition transmission. Whether a candidate base station that may become the target base station supports SBFD mode repetition transmission may be determined based on the SBFD-related information of the neighboring base stations 110-2 and 110-3.

For example, the source base station 110-1 may correct the handover margin as shown in Equation 2.

[Equation 2]

$$\text{HO margin(SBFD)} = \text{HO margin(Legacy)} - 10\log(\text{SBFD Repetition\_Target})$$

In Equation 1, HO margin(Legacy) represents the handover margin when the difference in repetition transmission between the source base station 110-1 and the target base station 110-2 is not considered. HO margin(SBFD) represents the handover margin that considers the difference in repetition transmission between the source base station 110-1 and the target base station 110-2. 10log(SBFD Repetition_Target) represents a handover margin correction value that considers the repetition transmission of the target base station 110-2 in the SBFD mode.

When the source base station 110-1 does not support the repetition transmission in the SBFD mode and the target base station 110-2 supports the repetition transmission in the SBFD mode, the source base station 110-1 may set the handover margin to be lower than before. Through this, the UE 120-1 may perform an early handover to the target base station 110-2 that supports SBFD, thereby ensuring high quality of service.

The source base station 110-1 may determine the target base station 110-2. When the UE 120-1 supports the SBFD mode, the source base station 110-1 may determine, as the target base station 110-2, a base station that may communicate with the UE 120-1 using the SBFD mode.

Although the UE 120-1 supports the SBFD mode, the source base station 110-1 may determine, as the target base station 110-2, a base station that does not support the SBFD mode. For example, when handover latency of the UE 120-1 is allowed by considering the quality of service required for the UE 120-1 and the traffic load for the UE 120-1, the source base station 110-1 may determine, as the target base station 110-2, a base station that does not support the SBFD mode to the UE 120-1. As another example, although there is no base station that may support the SBFD mode to the UE 120-1 among the neighboring base stations 110-2 and 110-3, the source base station 110-1 may determine, as the target base station 110-2, the base station that does not support the SBFD mode to the UE 120-1. As another example, when it is determined that use of the SBFD mode is inappropriate based on CLI measurement report and SI measurement report of the UE 120-1, the source base station 110-1 may determine, as the target base station 110-2, the base station that does not support the SBFD mode.

When the UE 120-1 supports the SBFD mode and the target base station 110-2 may support the SBFD mode for the UE 120-1, the source base station 110-1 may determine that the use of the SBFD mode is unnecessary in operation S112 described below. Alternatively, the source base station 110-1 may restrict the use of the SBFD mode based on at least one of the CLI measurement result and the SI measurement result of the UE 120-1. In this case, the source base station 110-1 may not transmit the SBFD-related information of the UE 120-1 to the target base station 110-2.

In operation S106, the source base station 110-1 may transmit a handover request (HANDOVER REQUEST) to the target base station 110-2. The handover request may include a cell ID of the target base station 110-2, a C-RNTI of the UE 120-1, RRM-configuration, and a rule for mapping QoS flow to a DRB.

According to an example embodiment, the handover request may further include the SBFD-related information of the UE 110-2. The SBFD-related information of the UE 110-2 may be included in the handover request as a portion of UE capability information. As another example, the SBFD-related information of the UE 110-2 may be included in the handover request as a separate IE. As described above, the SBFD-related information of the UE 110-2 may further include at least one of whether the UE 120-1 supports the SBFD mode, the maximum number of UL sub-bands supported by the UE 120-1, the UL sub-band range supported by the UE 120-1, CLI-related information, and SI-related information.

If the source base station 110-1 restricts the use of the UL sub-band of the UE 120-1 or determines that the use of the UL sub-band is unnecessary in the handover procedure, a portion or all of the SBFD-related information of the UE 120-1 may be omitted from the handover request.

In operation S108, the target base station 110-2 may perform admission control for the handover request. The target base station 110-2 may determine whether to admit the handover request. For example, the target base station 110-2 may perform a slice-aware admission control. When connected to a slice in which a PDU session is not supported, the target base station 110-2 may reject the corresponding PDU session. The target base station 110-2 may determine whether to allow the UE 120-1 to use the UL sub-band in the SBFD mode in the handover procedure. The target base station 110-2 may allow the UE 120-1 to use the UL sub-band in the SBFD mode in the handover procedure while admitting the handover request. As another example, the target base station 110 may admit the handover request, and may not allow the UE 120-1 to use the UL sub-band in the SBFD mode in the handover procedure.

In operation S110, the target base station 110-2 may transmit a handover request acknowledge (HANDOVER REQUEST ACKNOWLEDGE). The source base station 110-1 may receive the handover request acknowledge. The handover request acknowledge may include a new C-RNTI of the UE 120-1 used in a cell of the target base station 110-2, a cell ID of the target base station 110-2, security algorithm identifiers of the target base station 110-2, a dedicated RACH resource set of the target base station 110-2, connection between RACH resources, UE-specific CSI-RS configuration information, common RACH resources, and system information of the target base station 110-2.

According to an example embodiment, the handover request acknowledge may further include SBFD-related information of the target base station 110-2. The SBFD-related information of the target base station 110-2 may include at least one of information regarding whether the target base station supports the SBFD mode, SBFD sub-band-related information supported (or used) by the target base station 110-2, CLI-related information acquired by the target base station 110-2, SI-related information acquired by the target base station 110-2, UL repetition transmission-related information in the SBFD mode supported (or used) by the target base station 110-2, and DL repetition transmission-related information in the SBFD mode supported (or used) by the target base station 110-2. If the target base station 110-2 admits the handover request, but does not allow the UE 120-1 to use the UL sub-band in the SBFD mode in the handover procedure, the handover request acknowledge may not include the SBFD-related information of the target base station 110-2.

In operation S112, the source base station 110-1 may trigger the handover by transmitting an RRCReconfiguration message to the UE 120-1. The RRCReconfiguration message may include a cell ID of the target base station 110-2, a new C-RNTI, security algorithm identifiers of the target base station 110-2, a dedicated RACH resource set of the target base station 110-2, connection between RACH resources, UE-specific CSI-RS configuration information, common RACH resources, and system information of the target base station 110-2.

The RRCReconfiguration message may further include the SBFD-related information of the target base station 110-2. The RRCReconfiguration message may include at least one of the SBFD time domain used by the target base station 110-2, the number of UL sub-bands used by the target base station 110-2, the UL sub-band range, the number of DL sub-bands, and the DL sub-band range. At least a portion of the SBFD time domain, the number of UL sub-bands, and UL sub-band range used by the target base station 110-2 may be included in the RRCReconfiguration message as a portion of information on the dedicated RACH resource set or common RACH resources of the target base station 110-2.

If the handover is triggered, the UE 120-1 may perform a random access procedure for the target base station 110-2 based on the RRCReconfiguration message. When the RRCReconfiguration message includes the SBFD-related information of the target base station 110-2, the UE 120-1 may perform the random access procedure using the UL sub-band.

In operation S114, the source base station 110-1 may transmit an SN status transfer (SN STATUS TRANSFER) message to the target base station 110-2. In the case of DAPS handover, the source base station 110-1 may transmit not the SN status transfer message but an early status transfer (EARLY STATUS TRANSFER) message.

In operation S116, the target base station 110-2 may store (buffer) user data received from the source base station 110-1.

In operation S118, the UE 120-1 may complete an RRC handover procedure by synchronizing with the target base station 110-2 and by transmitting an RRCReconfigurationComplete message to the target base station 110-2. In the case of DAPS handover, even after the UE 120-1 receives the RRCReconfiguration message in operation S112, the UE 120-1 may maintain connection with the source base station 110-1. In the case of DAPS handover, the UE 120-1 may release the connection with the source base station 110-1 after receiving an explicit release instruction from the target base station 110-2. After operation S118, a procedure such as a path switch of user data may be further performed.

In operation S118, the UE 120-1 may perform the random access procedure for the target base station 110-2. In this process, the UE 120-1 may transmit a random access message to the target base station 110-2. The UE 120-1 may receive a random access acknowledge message from the target base station 110-2. The UE 120-1 may transmit a random access complete message to the target base station 110-2.

When the UE 120-1 performs the random access procedure using the UL sub-band and/or DL sub-band in the SBFD mode, a delay time ($T_{d2}$) shown in FIG. 7 may be reduced. For example, when the UE 120-1 uses a legacy TDD frame, an amount of waiting time used for the UE 120-1 to be allocated UL resources to transmit a random access message, an amount of waiting time used for the UE 120-1 to be allocated DL resources to receive a random access acknowledge response, and an amount of waiting time used for the UE 120-1 to be allocated UL resources to transmit a random access complete message may be relatively large.

However, when the UE 120-1 uses the UL sub-band and/or DL sub-band in the SBFD mode, at least one of a delay time required for the UE 120-1 to transmit the random access message, a delay time required for the UE 120-1 to receive the random access acknowledge message, and a delay time required for the UE 120-1 to transmit the random access complete message may be reduced.

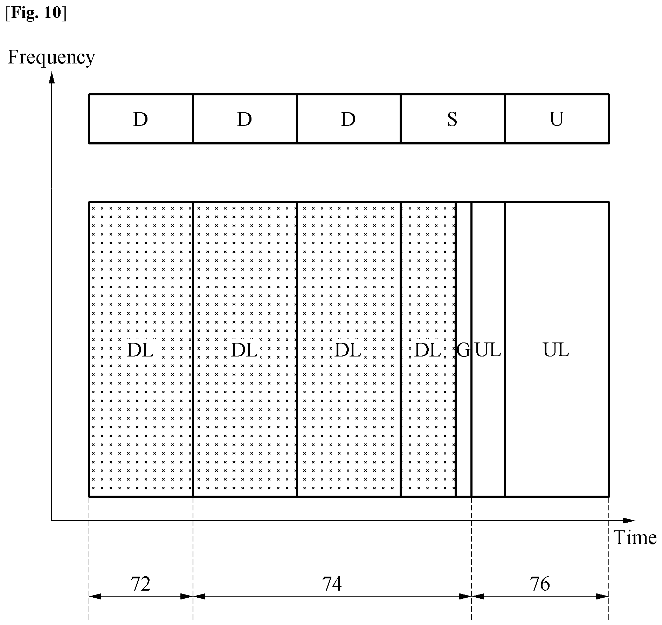

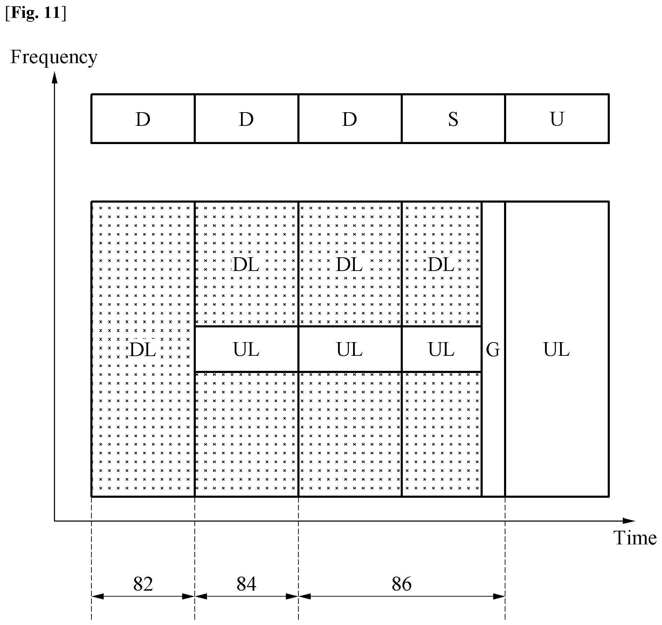

FIG. 10 illustrates a case in which the UE 120-1 performs a random access to the target base station 110-2 using a legacy TDD frame. FIG. 11 illustrates a case in which the UE 120-1 performs the random access to the target base station 110-2 using the UL sub-band in the SBFD mode.

Referring to FIG. 10, it may be assumed that a handover is triggered in a first time interval 72 to which downlink resources are allocated. Although the handover is triggered, the UE 120-1 may wait until uplink resources are allocated to secure a random access occasion. The UE 120-1 may wait in a second time interval 74. After a starting point of a third time interval 76, the UE 120-1 may be allocated uplink resources, may perform a random access to the target base station 110-2, and may transmit an RRCReconfigurationComplete message to the target base station 110-2. Therefore, the UE 120-1 may wait for at least a time interval greater than or equal to the second time interval 74. Therefore, RRC handover completion may be delayed. Therefore, latency may occur until the RRC handover is completed. When the UE 120-1 quickly moves or when the channel environment of the UE 120-1 quickly changes, a radio communication service may not be smoothly performed due to the latency in the handover procedure.

Referring to FIG. 11, the UE 120-1 may assume that the handover is triggered in a first time interval 82. The UE 120-1 may complete an RRC handover by performing the random access procedure for the target base station 110-2 using a UL sub-band in a second time interval 84, and by transmitting an RRCReconfigurationComplete message to the target base station 110-2. As another example, the UE 120-1 may perform the random access procedure for the target base station 110-2 using the UL sub-band in a third time interval 86 or in the second time interval 84 and the third time interval 86. Since the UE 120-1 completes the RRC handover without waiting until the UL time interval, an amount of time required until the RRC handover is completed may be shortened by the third time interval 86. Therefore, the latency occurring in the handover process may be reduced.

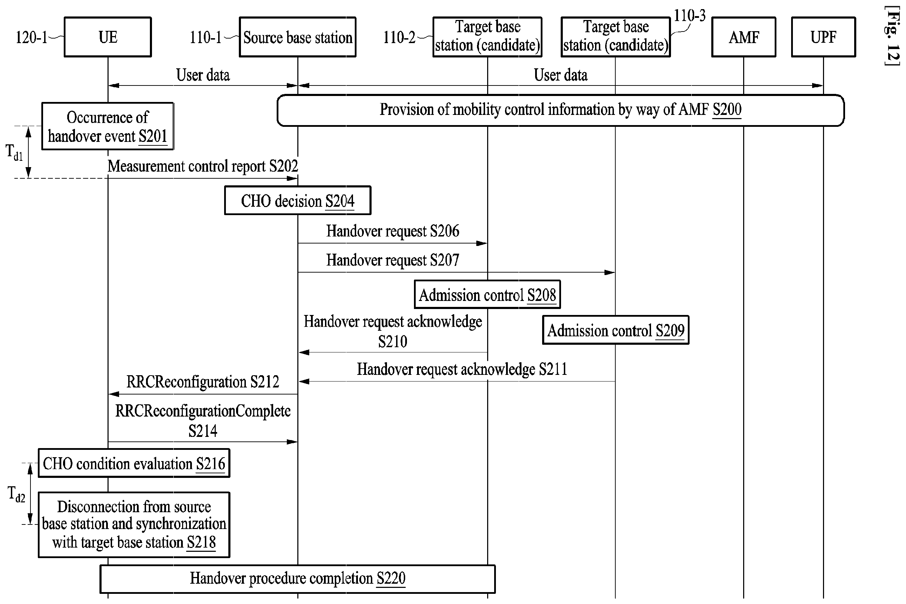

FIG. 12 is a flowchart illustrating a process of performing a conditional handover (CHO) according to an example embodiment. In describing the example embodiment, the similar or overlapping description in relation to FIG. 7 will be omitted.

Referring to FIG. 12, in operation S202, the UE 120-1 may transmit a measurement control report to the source base station 110-1. The UE 120-1 may utilize the UL sub-band in the SBFD mode when transmitting the measurement control report in the handover procedure. In this case, as described above with reference to FIG. 9, an amount of time required until CHO is determined may be shortened. The measurement control report may include SBFD-related information of the UE 120-1. The SBFD-related information of the UE 120-1 included in the measurement control report may further include at least one of whether the UE 120-1 supports the SBFD mode, SBFD sub-band-related information, uplink transmission power-related information of the UE 120-1, CLI-related information, and SI-related information.

In operations S206 and S207, the source base station 110-1 may transmit a handover request to at least one candidate target base station 110-2, 110-3.

A method of determining, by the source base station 110-1, at least one candidate target base station may be similar to a method of determining, by the source base station 110-1, a target base station, described with reference to FIG. 7.

According to an example embodiment, the handover request may further include the SBFD-related information of the UE 110-2. The SBFD-related information of the UE 110-2 may be included in the handover request as a portion of UE capability information. As another example, the SBFD-related information of the UE 110-2 may be included in the handover request as a separate IE. As described above, the SBFD-related information of the UE 110-2 may further include at least one of whether the UE 120-1 supports the SBFD mode, SBFD sub-band-related information, CLI-related information, and SI-related information.

In operations S210 and S211, the source base station 110-1 may receive handover request acknowledge from at least one candidate target base station 110-2, 110-3. According to an example embodiment, the handover request acknowledge may further include SBFD-related information of at least one candidate target base station 110-2, 110-3. The handover request acknowledge may include SBFD sub-band-related information supported (or used) by at least one candidate target base station 110-2, 110-3.

In operation S212, the source base station 110-1 may trigger the handover by transmitting an RRCReconfiguration message to the UE 120-1. The RRCReconfiguration message may further include SBFD-related information of at least one candidate target base station 110-2, 110-3.

In operation S214, the UE 120-1 may transmit an RRCReconfigurationComplete message to the source base station 110-1.

In operation S216, the UE 120-1 may evaluate whether a predefined CHO condition is satisfied. When the CHO condition is satisfied, the UE 120-1 may release connection with the source base station 110-1 and may perform synchronization with the target base station 110-2 in operation S218. The UE 120-1 may complete the RRC handover procedure by performing a random access to the target base station 110-2 and by transmitting the RRCReconfigurationComplete message to the target base station 110-2 in operation S220.

In a process in which the UE 120-1 performs the random access to the target base station 110-2, the UL sub-band may be used. In this case, as shown in FIG. 11, a handover time may be shortened.

In the SBFD mode, the UE 120-1 may increase the transmission gain through the repetition transmission. Also, in operation S118 of FIG. 7 and operation S220 of FIG. 12, the UE 120-1 may perform the random access procedure for the target base station 110-2. The UE 120-1 may adjust the transmission power for a PRACH in the process of performing the random access procedure. The UE 120-1 may adjust the transmission power for the PRACH with respect to the target base station 110-2 based on whether the source base station 110-1 supports the UL repetition transmission in the SBFD mode and whether the target base station 110-2 supports the UL repetition transmission in the SBFD mode.

Equation 3 represents a method in which the UE 120-1 determines the transmission power for the PRACH.

[Equation 3]

$$P_{\mathrm{PRACH}b,f,c}(i) = \min\left\{P_{\mathrm{CMAX},f,c}(i). \ P_{\mathrm{PRACH,target},f,c} + PL_{b,f,c}\right\} \ [\mathrm{dBm}]$$

In Equation 3, $P_{\mathrm{PRACH}\,b,f,c}(i)$ represents the transmission power for the PRACH in a UL BWP b of a carrier f of a serving cell c based on a DL RS of the serving cell c in a transmission occasion i. $P_{\mathrm{CMAX}\,f,c}(i)$ represents the maximum output power in the carrier f of the serving cell in the transmission occasion i. $PL_{b,f,c}$ denotes a pathloss in a UL BWP b of the carrier f computed by the UE 120-1 based on a DL RS related to PRACH transmission in the serving cell c. $P_{\mathrm{PRACH},target,f,c}$ denotes PRACH target reception power in the UL BWP b of the carrier f of the serving cell c.

The UE 120-1 may determine the transmission power for the PRACH for the target base station 110-2 to be different from that shown in Equation 3, based on at least one of whether the source base station 110-1 supports the UL repetition transmission in the SBFD mode, the UL repetition transmission count in the SBFD mode for the source base station 110-1, whether the target base station 110-2 supports the UL repetition transmission in the SBFD mode, and the UL repetition transmission count in the SBFD mode for the target base station 110-2.

As a first example, when the source base station 110-1 supports the UL repetition transmission in the SBFD mode and the target base station 110-2 does not support the UL repetition transmission in the SBFD mode, the UE 120-1 may determine the transmission power for the PRACH to be higher than that shown in Equation 3 in the random access process for the target base station 110-2.

In the first example, the UE 120-1 may correct $P_{\mathrm{PRACH},target,f,c}$ shown in Equation 3 to be higher than before. For example, the UE 120-1 may correct at least one of *preambleReceivedTargetPower* and *mgA - PreambleReceivedTargetPower* that are RRC parameters that determine $P_{\mathrm{PRACH},target,f,c}$. Here, *preambleReceivedTargetPower* denotes a parameter for initial random access preamble power for 4-step random access (RA) type, and *mgA - PreambleReceivedTargetPower* denotes a parameter for initial random access preamble power for 2-step random access (RA) type.

Hereinafter, a method of correcting, by the UE 120-1, *preambleReceivedTargetPower* is described as an example. The UE 120-1 may correct *mgA - PreambleReceivedTargetPower* in a manner similar to a method of correcting *preambleReceivedTargetPower*.

For example, the UE 120-1 may correct *preambleReceivedTargetPower* as shown in Equation 4.

[Equation 4]

$$preambleReceivedTargetPower(SBFD)$$

$$= preambleReceivedTargetPower(legacy) + SBFD\ (repetition\ gain)$$

In Equation 4, *preambleReceivedTargetPower*(*legacy*) denotes a parameter value for initial random access preamble power for 4-step RA type determined based on a decision method in a legacy system. *SBFD* (*repetition gain*) denotes a correction value that considers the repetition transmission gain of the source base station 110-1. *preambleReceivedTargetPower*(*SBFD*) denotes a parameter value for the initial random access preamble power for 4-step RA type of the target base station 110-2 that is corrected in consideration of the repetition transmission gain of the source base station 110-1.

As described above, when the UE 120-1 hands over from the source base station 110-1 that supports the UL repetition transmission of SBFD to the target base station 110-2 that does not support the UL repetition transmission of SBFD, the UE 120-1 may determine a parameter for initial random access preamble power for 4-step RA type to be higher than a value determined by the existing decision method, in consideration of the repetition transmission gain in the source base station 110-1. Through this, the UE 120-1 may maintain the quality of a UL signal even for the target base station 110-2.

As a second example, when the source base station 110-1 does not support the UL repetition transmission in the SBFD mode and the target base station 110-2 supports the UL repetition transmission in the SBFD mode, the UE 120-1 may determine the transmission power for the PRACH to be lower than that shown in Equation 3, in the random access process for the target base station 110-2.

In the second example, the UE 120-1 may correct $P_{\text{PRACH},target,f,c}$ shown in Equation 3 to be lower than before. For example, the UE 120-1 may correct at least one of *preambleReceivedTargetPower* and *mgA - PreambleReceivedTargetPower* that are RRC parameters that determine $P_{\text{PRACH},target,f,c}$ . Here, *preambleReceivedTargetPower* denotes a parameter for initial random access preamble power for 4-step RA type, and *mgA - PreambleReceivedTargetPower* denotes a parameter for initial random access preamble power for 2-step RA type.

Hereinafter, a method of correcting, by the UE 120-1, *preambleReceivedTargetPower* is described as an example. The UE 120-1 may correct *mgA - PreambleReceivedTargetPower* in a manner similar to a method of correcting *preambleReceivedTargetPower*.

For example, the UE 120-1 may correct *preambleReceivedTargetPower* as shown in Equation 5.

[Equation 5]

$$preambleReceivedTargetPower(SBFD)$$

$$= preambleReceivedTargetPower(legacy) - SBFD\ (repetition\ gain)$$

In Equation 5, *preambleReceivedTargetPower* (*legacy*) denotes a parameter value for initial random access preamble power for 4-step RA type determined based on a decision method in a legacy system. *SBFD* (*repetition gain*) denotes a correction value that considers the repetition transmission gain of the target base station 110-2. *preambleReceivedTargetPower*(*SBFD*) denotes a parameter value for initial random access preamble power for 4-step RA type of the target base station 110-2 that is corrected in consideration of the repetition transmission gain of the target base station 110-2.

As described above, when the UE 120-1 hands over from the source base station 110-1 that does not support the UL repetition transmission of SBFD to the target base station 110-2 that supports the UL repetition transmission of SBFD, the UE 120-1 may determine a parameter for initial random access preamble power for 4-step RA type to be lower than a value determined using an existing decision method, in consideration of the repetition transmission gain in the target base station 110-2. Through this, the UE 120-1 may save the power consumption.

As a third example, when both the source base station 110-1 and the target base station 110-2 support the UL repetition transmission of the SBFD mode, but the UL repetition transmission count for the source base station 110-1 is set to be higher than the UL repetition transmission count for the target base station 110-2, the UE 120-1 may determine the transmission power for the PRACH to be higher than that shown in Equation 3 in the random access process for the target base station 110-2. In this process, the UE 120-1 may set at least one of *preambleReceivedTargetPower* and *mgA - PreambleReceivedTargetPower* to be larger than that in the legacy system, which is similar as shown in Equation 4.

As a fourth example, when both the source base station 110-1 and the target base station 110-2 support the UL repetition transmission of the SBFD mode, but the UL repetition transmission count for the source base station 110-1 is set to be lower than the UL repetition transmission count for the target base station 110-2, the UE 120-1 may determine the transmission power for the PRACH to be lower than that shown in Equation 3 in the random access process for the target base station 110-2. In this process, the UE 120-1 may determine at least one of *preambleReceivedTargetPower* and *mgA - PreambleReceivedTargetPower* to be smaller than that in the legacy system, which is similar as shown in Equation 5.

The transmission power for the PRACH is described in Equation 3. The UE 120-1 may also correct transmission power for other UL channels in addition to the transmission power for the PRACH. For example, the UE 120-1 may correct at least one of transmission power for a PUSCH and transmission power for a PUCCH.

In the first case and the third case described above, the UE 120-1 may set at least one of the transmission power for the PUSCH and the transmission power for the PUCCH to be larger than that in the legacy system. In the second case and the fourth case described above, the UE 120-1 may set at least one of the transmission power for the PUSCH and the transmission power for the PUCCH to be smaller than that in the legacy system.

Equation 6 shows a method of determining the transmission power for the PUSCH in the legacy system.

[Equation 6]

$$P_{\text{PUSCH},b,f,c}(i,j,q_d,l) = \min \left\{ \begin{array}{l} P_{\text{CMAX},f,c}(i), \\ P_{\text{O\_PUSCH},b,f,c}(j) + 10\log_{10}(2^\mu \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

[dBm]

Parameters shown in Equation 6 are defined in 3GPP TS 38.213 V16.13.0 section 7.1.1. Among them, $P_{\text{PUSCH},b,f,c}(i, j, q_d, l$ state in which parameter set configuration of an index j and PUSCH power control of an index l are adjusted in a UL BWP b of a carrier f of a serving cell c based on a DL RS of the serving cell c in a transmission occasion i. $P_{\text{CMAX},f,c}(i)$ represents the maximum output power of the UE. Among the parameters of Equation 6, $P_{\text{O\_PUSCH}b,f,c}(j)$ may depend on *preambleReceivedTargetPower*.

In the first case and the third case described above, the UE 120-1 may set the transmission power for the PUSCH for the target base station 110-2 to be higher than that in the legacy system by setting *preambleReceivedTargetPower* to be higher than that in the legacy system as shown Equation 4.

In the second case and the fourth case described above, the UE 120-1 may set the transmission power for the PUSCH for the target base station 110-2 to be lower than that in the legacy system by setting *preambleReceivedTarget-Power* to be lower than that in the legacy system as shown in Equation 5.

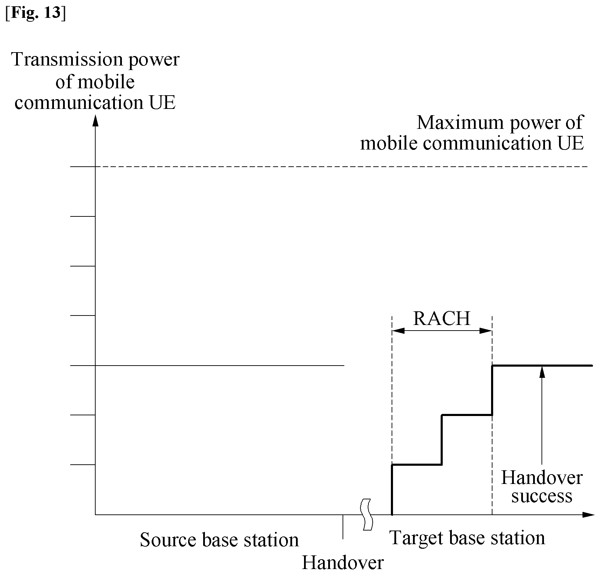

FIG. 13 is a graph showing the change in transmission power of the UE 120-1 in a process in which the UE 120-1 performs a handover procedure in a legacy system.

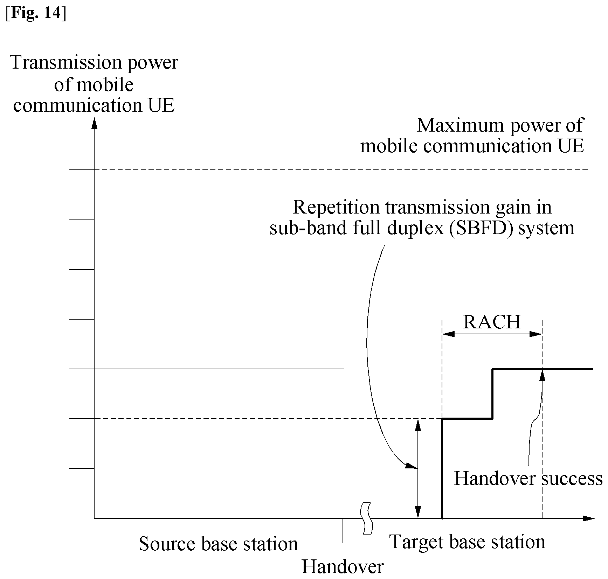

FIG. 14 is a graph showing the change in transmission power in a process in which the UE 120-1 performs a handover procedure from an SBFD base station to a non-SBFD base station.

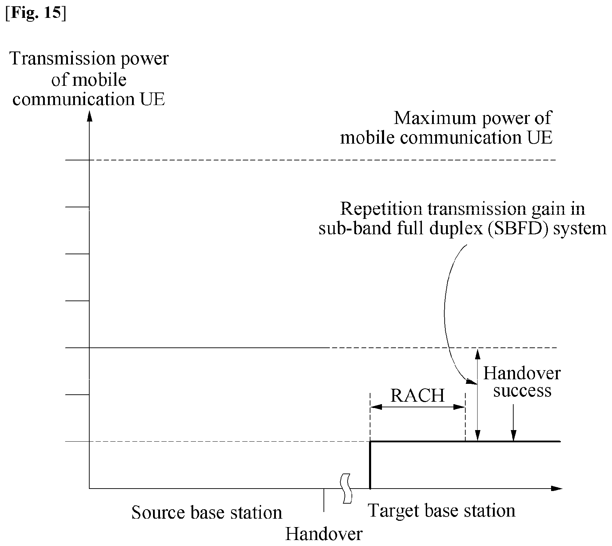

FIG. 15 is a graph showing the change in transmission power in a process in which the UE 120-1 performs a handover procedure from a non-SBFD base station to an SBFD base station.

Referring to FIGS. 13 and 14, compared to a case when the UE 120-1 performs the handover procedure in the legacy system, the PRACH transmission power may further increase when the UE 120-1 hands over from the SBFD base station to the non-SBFD base station. Through this, although the UL repetition transmission supported by the source base station 110-1 is not supported by the target base station 110-2, the UL transmission quality may be maintained.

Referring to FIGS. 13 and 15, compared to a case in which the UE 120-1 performs the handover procedure in the legacy system, the PRACH transmission power may further decrease when the UE 120-1 hands over from the non-SBFD base station to the SBFD base station. Through this, the UE 120-1 may save power consumption in consideration of the repetition transmission gain for the target base station 120-2.

A method and apparatus for performing a handover procedure in a mobile communication system according to an example embodiment is described with reference to FIGS. 1 to 15. According to at least one example embodiment, since SBFD-related information of a UE is provided to a source base station, a UL sub-band of an SBFD mode may be utilized in a handover procedure. According to at least one example embodiment, in a handover procedure, SBFD-related information of a UE may be provided to a target base station, and SBFD-related information of the target base station may be provided to the UE. Accordingly, the UE may transmit signals to the target base station using a UL sub-band in the handover procedure. According to at least one example embodiment, as a UL sub-band is used in a measurement control reporting procedure, a delay time required until handover decision may be shortened. According to at least one example embodiment, since a UL sub-band is used in a process in which a UE performs random access to a target base station, a delay time required to complete radio resource control (RRC) handover may be shortened. According to at least one example embodiment, a UE may perform repetition transmission using a UL sub-band in a handover procedure, thereby increasing accumulated transmission power gain of the UE.

Based on description related to various example embodiments set forth herein, it will be apparent to one of ordinary skill in the art that the methods and/or processes of the present invention and operations thereof may be implemented by hardware, software, or any combination of hardware and software suitable for a specific usage. The hardware may include a general-purpose computer and/or a dedicated computing device or a specific computing device or a special aspect or component of the specific computing device. The processes may be implemented using one or more processors having internal and/or external memories, for example, a microprocessor, an embedded microcontroller, a microcomputer, an arithmetic logic unit (ALU), a digital signal processor, for example, a programmable digital processor, or other programmable devices. Additionally or alternatively, the processes may be implemented in an application specific integrated circuit (ASIC), a programmable gate array, for example, a field programmable gate array (FPGA), a programmable logic unit (PLU), or a programmable array logic (PAL), or another device capable of executing and responding to other instructions, any other device or combination of devices that may be configured to process electronic signals. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may permanently or temporarily be embodied in any type of machine, component, physical equipment, virtual equipment, computer storage medium or device, or a signal wave to be transmitted, to be interpreted by the processing device or to provide an instruction or data to the processing device. The software also may be distributed over network coupled computer systems so that the software is stored and executed in a distributed fashion. The software and data may be stored by one or more computer readable storage media.

In addition, portions that contribute to objects of the technical solution of the present invention or conventional art may be implemented in the form of program instructions that may be performed through various computer components and recorded in computer-readable media. The computer-readable media may include, alone or in combination with program instructions, data files, data structures, and the like. Program instructions stored in the media may be those specially designed and constructed for the example embodiments, or they may be well-known and available to those having skill in the computer software arts. Examples of the media include magnetic media such as hard disks, floppy disks, and magnetic tapes; optical media such as CD ROM, DVDs, and Blu-ray; magneto-optical media such as floptical disks; and hardware devices that are specially configured to store and perform program instructions, such as read-only memory (ROM), random access memory (RAM), flash memory, and the like. Examples of program instructions include, but are not limited to, a machine language code, and a byte code, as well as a high-level language code that may be executed by a computer using an interpreter and the like, which may be created using a structured programming language such as C, an object-oriented programming language such as C++, or a high-level or low-level programming language (assembler, hardware description languages, and database programming languages and technologies) that may be stored and compiled or interpreted for execution on any of the aforementioned devices, as well as a heterogeneous combination of processors, processor architectures, or combinations of different hardware and software, or any other machine capable of executing program instructions.

Therefore, in one aspect of the present invention, when the methods and combinations thereof described above are performed by one or more computing devices, the methods and combinations of the methods may be implemented as an executable code that performs each of operations. In another aspect, the methods may be implemented as systems that perform the operations, and the methods may be distributed across devices in various manners, or all functions may be integrated into a single, dedicated, standalone device, or other hardware. In still another aspect, the methods that perform operations associated with the processes described above may include any of hardware and/or software described above. All such sequential combinations and arrangements are intended to fall within the scope of the present disclosure.

For example, the hardware device may be configured to act as one or more software modules to perform operations of the example embodiments, and vice versa. The hardware device may include a processor, such as MPU, CPU, GPU, and TPU, which is configured to couple with a memory, such as ROM/RAM, for storing program instructions and to execute instructions stored in the memory, and may include a communication unit that may exchange signals with an external device. In addition, the hardware device may include a keyboard, a mouse, and other external input devices to receive instructions written by developers.

Although the present invention is described with reference to specific details, such as specific components, and limited example embodiments and drawings, they are provided only to help more general understanding of the present invention, and the present invention is not limited to the example embodiments. It will be apparent to one of ordinary skill in the art to which the present invention pertains that various alterations and modifications in form and details may be made from the description.

Therefore, the spirit of the present invention should not be limited to the example embodiments described above, and all modifications equal or equivalent to the claims attached herein as well as the claims are considered to fall within the scope of the spirit of the present invention. For example, suitable results may be achieved if the described techniques are performed in different order, and/or if components in a described system, architecture, device, or circuit are combined in a different manner, or replaced or supplemented by other components or their equivalents.

Such equal or equivalent modifications may include, for example, logically equivalent methods capable of producing the same results as those acquired by carrying out the methods according to the present invention, and the spirit and scope of the present invention should not be limited by the example embodiment set forth above and should be understood in the broadest sense permissible by law.

## Claims

1. A handover method performed by a base station, the handover method comprising:

   receiving a measurement control report of a user equipment (UE);
   determining a handover based on the measurement control report of the UE; and
   transmitting a handover request to a target base station,
   wherein the handover request includes sub-band full duplex (SBFD)-related information of the UE.

2. The handover method of claim 1, wherein the SBFD-related information of the UE includes at least one of whether the UE supports an SBFD mode, SBFD sub-band-related information supported by the UE, uplink transmission power-related information of the UE, information on repetition transmission in the SBFD mode, cross link interference (CLI)-related information, and self-interference (SI)-related information.

3. The handover method of claim 2, wherein the SBFD sub-band-related information supported by the UE includes at least one of information on an SBFD time domain in which an SBFD sub-band is resent, the UL sub-band range supported by the UE, the downlink (DL) sub-band range supported by the UE, and an indicator indicating one of a plurality of SBFD sub-band components.

4. The handover method of claim 1, further comprising:

   acquiring the SBFD-related information of the UE from the UE; and
   providing allocation information of a UL sub-band and an SBFD time domain to the UE,
   wherein the measurement control report is received through the UL sub-band in the SBFD time domain.

5. The handover method of claim 4, further comprising:

   acquiring SBFD-related information of neighboring base stations,
   wherein the determining of the handover determines at least one of the neighboring base stations as a target base station based on the SBFD-related information of the UE and the SBFD-related information of the neighboring base stations.

6. The handover method of claim 5, wherein the SBFD-related information of the neighboring base stations includes at least one of information regarding whether each of the neighboring base stations supports an SBFD mode, SBFD sub-band-related information supported by each of the neighboring base stations, CLI-related information acquired by each of the neighboring base stations, SI-related information acquired by each of the neighboring base stations, UL repetition transmission-related information in the SBFD mode supported (or used) by each of the neighboring base stations, and DL repetition transmission-related information in the SBFD mode supported by each of the neighboring base stations.

7. The handover method of claim 1, wherein the determining of the handover based on the measurement control report of the UE comprises determining whether a handover margin is satisfied based on the measurement control report of UE, and when the handover margin is satisfied, determining the handover, and
the handover margin is determined based on whether the base station supports UL repetition transmission in the SBFD mode and whether the target base station supports the UL repetition transmission in the SBFD mode.

8. The handover method of claim 7, wherein, when the base station supports the UL repetition transmission in the SBFD mode and the target base station does not support the UL repetition transmission in the SBFD mode, the handover margin is determined to be greater than a handover margin of a legacy system.

9. The handover method of claim 7, wherein, when the base station does not support the UL repetition transmission in the SBFD mode and the target base station supports the UL repetition transmission in the SBFD mode, the handover margin is determined to be smaller than a handover margin of a legacy system.

10. The handover method of claim 1, wherein the measurement control report includes SBFD-related information of the UE.

11. The handover method of claim 1, further comprising:

receiving a handover request acknowledge from the target base station,
wherein the handover request acknowledge includes SBFD-related information of the target base station,
the SBFD-related information of the target base station includes at least one of information regarding whether the target base station supports an SBFD mode, SBFD sub-band-related information supported by the target base station, CLI-related information acquired by the target base station, SI-related information acquired by the target base station, UL repetition transmission-related information in the SBFD mode supported by the target base station, and DL repetition transmission-related information in the SBFD mode supported by the target base station.

12. The handover method of claim 11, further comprising:

transmitting a message for triggering the handover to the UE,
wherein the message for triggering the handover includes the SBFD-related information of the target base station.

13. The handover method of claim 12, wherein the message for triggering the handover is an RRCReconfiguration message.

14. A base station comprising:

a communication unit; and
a processor,
wherein the processor is configured to perform receiving a measurement control report of a user equipment (UE); determining a handover based on the measurement control report of the UE; and transmitting a handover request to a target base station, and
the handover request includes sub-band full duplex (SBFD)-related information of the UE.

15. A handover method performed by a UE, the handover method comprising:

transmitting a measurement control report to a source base station;
receiving a message for triggering a handover from the source base station; and
performing a random access to a target base station that is identified by the message for triggering the handover,
wherein the message for triggering the handover includes sub-band full duplex (SBFD)-related information of the target base station.

16. The handover method of claim 15, wherein the random access to the target base station is performed through an uplink (UL) sub-band.

**17.** The handover method of claim 15, wherein the message for triggering the handover is an RRCReconfiguration message.

**18.** The handover method of claim 15, further comprising:

providing SBFD-related information of the UE to the source base station; and
acquiring allocation information of a UL sub-band and an SBFD time domain from the source base station, wherein the measurement control report is transmitted through the UL sub-band in the SBFD time domain.

**19.** The handover method of claim 15, wherein the performing of the random access to the target base station comprises determining PRACH transmission power for the random access to the target base station and performing the random access using the determined PRACH transmission power, and
the PRACH transmission power is determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

**20.** The handover method of claim 19, wherein, when the source base station supports the UL repetition transmission in the SBFD mode and the target base station does not support the UL repetition transmission in the SBFD mode, the PRACH transmission power is set to be larger than PRACH transmission power in a legacy system.

**21.** The handover method of claim 19, wherein, when the source base station does not support the UL repetition transmission in the SBFD mode and the target base station supports the UL repetition transmission in the SBFD mode, the PRACH transmission power is set to be smaller than PRACH transmission power in a legacy system.

**22.** The handover method of claim 15, wherein PUSCH transmission power for the target base station is determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

**23.** The handover method of claim 22, wherein, when the source base station supports the UL repetition transmission in the SBFD mode and the target base station does not support the UL repetition transmission in the SBFD mode, the PUSCH transmission power is set to be larger than PUSCH transmission power in a legacy system.

**24.** The handover method of claim 22, wherein, when the source base station does not support the UL repetition transmission in the SBFD mode and the target base station supports the UL repetition transmission in the SBFD mode, the PUSCH transmission power is set to be smaller than PUSCH transmission power in a legacy system.

**25.** The handover method of claim 15, wherein PUCCH transmission power for the target base station is determined based on at least one of whether the source base station supports UL repetition transmission in an SBFD mode, the UL repetition transmission count in the SBFD mode for the source base station, whether the target base station supports the UL repetition transmission in the SBFD mode, and the UL repetition transmission count in the SBFD mode for the target base station.

**26.** The handover method of claim 25, wherein, when the source base station supports the UL repetition transmission in the SBFD mode and the target base station does not support the UL repetition transmission in the SBFD mode, the PUCCH transmission power is set to be larger than PUCCH transmission power in a legacy system.

**27.** The handover method of claim 25, wherein, when the source base station does not support the UL repetition transmission in the SBFD mode and the target base station supports the UL repetition transmission in the SBFD mode, the PUCCH transmission power is set to be smaller than PUCCH transmission power in a legacy system.

**28.** A user equipment (UE) comprising:

a communication unit; and
a processor,
wherein the processor is configured to perform transmitting a measurement control report to a source base station; receiving a message for triggering a handover from the source base station; and performing a random access to a target base station that is identified by the message for triggering the handover, and
the message for triggering the handover includes sub-band full duplex (SBFD)-related information of the target base station.

[**Fig. 1**]

[Fig. 2]

200

220

Memory

ROM | RAM

210

Processor

240

Input interface device

250

Output interface device

270

260

Storage device

230

Transmission and reception device

[Fig. 3]

NSSF | NEF | NRF | PCF | UDM | AF

Nnssf | Nnef | Nnrf | Npcf | Nudm | Naf

Nausf | Namf | Nsmf

AUSF | AMF | SMF | SCP

N1

N2

N4

UE — RAN — N3 — UPF — N6 — DN

N9

[**Fig. 4**]

[**Fig. 5**]

[Fig. 6]

```
           ╭──────────╮
           │  Start   │
           ╰────┬─────╯
                │
                ▼
  ┌─────────────────────────────────────┐
  │ Acquire SBFD-related information of UE│───S10
  └─────────────────┬───────────────────┘
                    │
                    ▼
  ┌─────────────────────────────────────┐
  │   Perform SBFD resource scheduling   │───S20
  └─────────────────┬───────────────────┘
                    │
                    ▼
  ┌─────────────────────────────────────┐
  │ Acquire neighboring base station information│───S30
  └─────────────────┬───────────────────┘
                    │
                    ▼
           ╭──────────╮
           │   End    │
           ╰──────────╯
```

[Fig. 7]

[Fig. 8]

Frequency

| D | D | D | S | U |

Time

52    54    56

[Fig. 9]

Frequency

| D | D | D | S | U |

[Fig. 10]

Frequency

| D | D | D | S | U |
|---|---|---|---|---|

Time

72    74    76

[Fig. 11]

[Fig. 12]

[Fig. 13]

Transmission power
of mobile
communication UE

Maximum power of
mobile communication UE

RACH

Handover
success

Source base station

Target base station

Handover

[Fig. 14]

[Fig. 15]

## INTERNATIONAL SEARCH REPORT

| International application No. |
| --- |
| **PCT/KR2023/021915** |

### A. CLASSIFICATION OF SUBJECT MATTER

**H04W 36/00**(2009.01)i; **H04W 36/08**(2009.01)i; **H04W 52/14**(2009.01)i; **H04W 52/32**(2009.01)i; **H04L 1/08**(2006.01)i

According to International Patent Classification (IPC) or to both national classification and IPC

### B. FIELDS SEARCHED

Minimum documentation searched (classification system followed by classification symbols)

H04W 36/00(2009.01); H04L 27/26(2006.01); H04W 24/10(2009.01); H04W 36/08(2009.01); H04W 48/16(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: measurement control report, sub-band full duplex, handover, cross link interference, self interference, UL subband

### C. DOCUMENTS CONSIDERED TO BE RELEVANT

| Category* | Citation of document, with indication, where appropriate, of the relevant passages | Relevant to claim No. |
| --- | --- | --- |
| Y | US 2022-0240136 A1 (COMCAST CABLE COMMUNICATIONS, LLC) 28 July 2022 (2022-07-28)<br>See paragraphs [0312]-[0353]; claim 1; and figure 18. | 1-6,10-18,28 |
| A | | 7-9,19-27 |
| Y | US 2023-0164674 A1 (QUALCOMM INCORPORATED) 25 May 2023 (2023-05-25)<br>See paragraph [0074]; and claims 1-3. | 1-6,10-18,28 |
| Y | Moderator (CATT). Summary #1 of subband non-overlapping full duplex. R1-2210314, 3GPP TSG RAN WG1 #110bis-e, e-Meeting. 12 October 2022.<br>See pages 6-7, 50 and 62. | 3-6,10,16,18 |
| A | ZTE et al. Discussion of enhancements on dynamic/flexible TDD. R1-2306983, 3GPP TSG-RAN WG1 #114. Toulouse, France. 11 August 2023.<br>See sections 3-4.3. | 1-28 |
| A | KR 10-2019-0097172 A (LG ELECTRONICS INC.) 20 August 2019 (2019-08-20)<br>See paragraphs [0148]-[0157]; and claim 1. | 1-28 |

☐ Further documents are listed in the continuation of Box C.   ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **07 June 2024** | **10 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2022-0240136 | A1 | 28 July 2022 | CA | 3034026 | A1 | 17 August 2019 |
| | | | | EP | 3528540 | A1 | 21 August 2019 |
| | | | | EP | 3528540 | B1 | 03 April 2024 |
| | | | | US | 11343728 | B2 | 24 May 2022 |
| | | | | US | 11825360 | B2 | 21 November 2023 |
| | | | | US | 2019-0261234 | A1 | 22 August 2019 |
| | | | | US | 2024-0049070 | A1 | 08 February 2024 |
| US | 2023-0164674 | A1 | 25 May 2023 | WO | 2023-091817 | A1 | 25 May 2023 |
| KR | 10-2019-0097172 | A | 20 August 2019 | CN | 110383722 | A | 25 October 2019 |
| | | | | EP | 3567759 | A1 | 13 November 2019 |
| | | | | EP | 3567759 | B1 | 15 March 2023 |
| | | | | JP | 2020-504563 | A | 06 February 2020 |
| | | | | JP | 7245162 | B2 | 23 March 2023 |
| | | | | KR | 10-2514446 | B1 | 27 March 2023 |
| | | | | US | 11202218 | B2 | 14 December 2021 |
| | | | | US | 11910222 | B1 | 20 February 2024 |
| | | | | US | 2020-0389805 | A1 | 10 December 2020 |
| | | | | US | 2022-0046459 | A1 | 10 February 2022 |
| | | | | US | 2024-0049033 | A1 | 08 February 2024 |
| | | | | WO | 2018-128297 | A1 | 12 July 2018 |

Form PCT/ISA/210 (patent family annex) (July 2022)